# EUROPÄISCHE PATENTANMELDUNG

(11) **EP 2 199 036 A2**
(43) Veröffentlichungstag der Anmeldung: **23.06.2010**
(21) Anmeldenummer: 09013761.3
(22) Anmeldetag: 02.11.2009
(51) Int. Cl.: B25J 9/16, G05B 19/404

(54) **Verfahren und Vorrichtung zur Kompensation einer kinematischen Abweichung**

(30) Priorität: 02.12.2008 DE 102008060052
(71) Anmelder: KUKA Roboter GmbH, 86165 Augsburg (DE)
(72) Erfinder: Kaderk, Sebastian, 86199 Augsburg (DE); Mittmann, Ralf, 86415 Mering (DE); Groll, Michael, 86167 Augsburg (DE)
(74) Vertreter: Schlotter, Alexander Carolus Paul

(57) **Zusammenfassung**

Ein erfindungsgemäßes Verfahren zur Kompensation einer kinematischen Abweichung, insbesondere einer Temperaturdrift, eines Manipulators, insbesondere eines Roboters (1), umfasst die Schritte:
(S10) Anfahren verschiedener Posen des Manipulators;
(S20) Erfassen einer Position (x, y, z, a, b, g) eines Manipulatorgliedes (2) mittels eine externen 3D-Positionserfassungseinrichtung (4) in der jeweiligen Pose; und
(S30) Kompensieren der kinematischen Abweichung auf Basis der erfassten Position des Manipulatorgliedes.

## Beschreibung

Die vorliegende Erfindung betrifft ein Verfahren und eine Vorrichtung zur Kompensation einer kinematischen Abweichung, insbesondere einer Temperaturdrift, eines Manipulators, insbesondere eines Roboters.

Heutige Industrieroboter sind in der Lage, mit ihrem Werkzeug-Referenzkoordinatensystem, dem sogenannten "Tool Center Point" (TCP) mit hoher Genauigkeit und Wiederholbarkeit mehrfach dieselbe Position anzufahren, so dass ein Werkzeug wiederholt an stets derselben, vorgegebenen Stelle im Arbeitsraum in stets derselben Weise wirken kann.

Als Position wird dabei vorliegend die Lage, beispielsweise die Entfernungskomponenten entlang der Achsen eines inertialen kartesischen Referenzkoordinatensystems, Winkel, Radius und Höhe eines inertialen Zylinder-Referenzkoordinatensystems, oder Winkel und Radius eines inertialen Kugel-Referenzkoordinatensystems, und/oder die Orientierung, beispielsweise die EULER- oder KARDAN-Winkel gegenüber einem inertialen Referenzkoordinatensystem bezeichnet. So kann beispielsweise die Lage und Orientierung des Werkzeug-Referenzkoordinatensystems im Arbeitsraum durch seine Verdrehung und die Verschiebung seines Ursprungs gegenüber einem Inertialsystem beschrieben werden.

Im Betrieb ergeben sich jedoch kinematische Abweichungen zwischen einer, beispielsweise vorab geteachten oder mittels offline-Programmierung vorgegebenen, Soll-Position des Werkzeug-Referenzkoordinatensystems und dessen tatsächlicher Lage und Orientierung. Neben Verschleiß und Lastunterschieden resultieren solche kinematische Abweichungen insbesondere aus temperaturbedingten Veränderungen der Kinematik des Manipulators: durch Wärmedehnung der miteinander verbundenen Manipulatorglieder ergeben sich Veränderungen in den Lagen der einzelnen Achsen des Manipulators zueinander gegenüber einer Referenzkonfiguration, mit der geteacht oder auf deren Basis offline programmiert wurde, so dass beispielsweise ein kinematisches Modell, welches einer Vorwärts- oder Rückwärtstransformation zwischen Gelenk- und Arbeitsraumkoordinaten zugrunde liegt, nicht mehr korrekt ist.

Um diese sogenannte Temperaturdrift zu kompensieren, schlägt die DE 198 26 395 A1 vor, zusätzlich zu einem Werkzeug eines Roboters einen Maßkörper an dem Roboter zu befestigten. Zwei voneinander beabstandete externe Kameras erfassen die Lage von Referenzpunkten auf dem Maßkörper, zusätzlich erfasst ein Lagesensor an dem Maßkörper dessen Lage relativ zu einem externen Messpunkt. Auf Basis dieser erfassten Lagen wird ein Korrekturvektor zur Kompensierung der Temperaturdrift ermittelt, wobei Posen im gesamten Arbeitsraum des Roboters vermessen werden.

Der zusätzliche Maßkörper bedingt ebenso wie die zwei Kameras, der Lagesensor und der externe Messpunkt einen hohen Aufwand. Zusätzlich führen Veränderungen der Positionen der beiden externen Kameras und des externen Messpunktes relativ zueinander während der Durchführung des Verfahrens zu Fehlern bei der Kompensierung der Temperaturdrift.

Die DE 101 53 049 B4 schlägt vor, mittels wenigstens dreier voneinander beabstandeter externer Abstandssensoren die Abstände zu einem Werkzeug eines Roboters zu erfassen und auf Basis der Verschiebung des Schwerpunktes von Durchstoßpunkten der Abstandssensorrichtungen auf der Werkzeugoberfläche eine Temperaturdrift zu kompensieren. Auch hier bedingen die wenigstens drei Abstandssensoren einen hohen Aufwand. Veränderungen der Positionen der Abstandssensoren relativ zueinander führen ebenso wie die Schwerpunktmittelung und die vereinfachende Annahme, dass stets in etwa dieselben Durchstoßpunkte erfasst werden, ebenfalls zu Fehlern bei der Kompensierung der Temperaturdrift. Da zudem nicht die Position des Werkzeuges, sondern die Abstände zu Durchstoßpunkten erfasst wird, können beispielsweise Abweichungen in der Rotationsachse eines rotationssymmetrischen Werkzeuges nicht erfasst und kompensiert werden.

Aufgabe der vorliegenden Erfindung ist es, die Kompensation einer kinematischen Abweichung zu verbessern.

Diese Aufgabe wird durch ein Verfahren mit den Merkmalen des Anspruchs 1 gelöst. Anspruch 10 stellt eine Vorrichtung, die zur Durchführung eines erfindungsgemäßen Verfahrens eingerichtet ist, die Ansprüche 11, 12 ein entsprechendes Computerprogramm bzw. Computerprogrammprodukt, insbesondere einen Datenträger oder ein Speichermedium unter Schutz. Die Unteransprüche betreffen vorteilhafte Weiterbildungen.

Ein erfindungsgemäßes Verfahren dient zur Kompensation einer, insbesondere temperaturbedingten, kinematischen Abweichung, eines Manipulators, insbesondere eines Roboters wie beispielsweise eines Industrieroboters. Hierzu werden nacheinander verschiedene, vorzugsweise wenigstens vier, besonders bevorzugt wenigstens sechs oder mehr Posen des Manipulators angefahren.

Als Pose wird dabei eine Stellung des Manipulators bezeichnet, die beispielsweise durch seine Gelenkstellungen, etwa die Winkel oder Lagen seiner Antriebe, oder durch die Positionen seiner Glieder, insbesondere seines TCPs, im Arbeitsraum definiert sein kann. Dabei sind die Gelenkstellungen durch Lösen der Vorwärtskinematik stets eindeutig auf Gliedpositionen im Arbeitsraum umrechenbar, diese in nicht-singulären Posen entsprechend durch Lösen der Rückwärtskinematik in die zugehörigen Gelenkstellungen überführbar.

Um die Genauigkeit zu erhöhen, kann es vorteilhaft sein, dabei verschiedene Posen des Manipulators zu wählen, in denen jeweils eine oder mehrere Achsen des Manipulators eine im Wesentlichen entgegengesetzte Stellung einnehmen, beispielsweise gegenüber einer Referenz- bzw. Nulllage betragsmäßig im Wesentlichen die gleiche Auslenkung in entgegengesetzte Bewegungsrichtungen der Achse aufweisen.

In der jeweiligen Pose wird eine Position eines Manipulatorgliedes, bevorzugt des Arbeitswerkzeuges, mittels einer externen 3D-Positionserfassungseinrichtung erfasst. Diese weist in einer bevorzugten Ausführung eine, vorzugsweise nur eine, Kamera, und eine Bildauswertung auf.

Im Gegensatz zu der eingangs erläuterten Erfassung eines zusätzlichen Maßkörpers vereinfacht die Erfassung eines Manipulatorgliedes das Verfahren und erlaubt insbesondere dessen Durchführung während des Betriebs ohne größere Änderungen am Manipulator selber. Wird dessen Arbeitswerkzeug, beispielsweise ein Greifer, ein Bohrer, Fräser oder ein Schweißwerkzeug wie eine Schweißzange oder dergleichen, erfasst, kann die kinematische Abweichung auf Basis der Abweichung des Werkzeug-Referenzkoordinatensystems und somit besonders effektiv erfasst werden, ohne dass Veränderungen zwischen einem Maßkörper und dem TCP das Ergebnis verfälschen.

Die Erfassung mittels einer einzigen Kamera verringert nicht nur den apparativen Aufwand, sondern schließt auch Fehler aufgrund einer Veränderung der Relativpositionen mehrerer Sensoren oder Kameras untereinander aus. Als Kamera wird dabei vorliegend jede Einrichtung bezeichnet, mit der Gegenstände optisch derart erfassbar sind, dass sie einer Bildauswertung zugeführt werden können. Sie kann gleichermaßen im sichtbaren wie auch im unsichtbaren, insbesondere infraroten Lichtbereich arbeiten.

Eine Bildauswertung der vorstehend erläuterten bevorzugten Ausführung der 3D-Positionserfassungseinrichtung ist in der Lage, aus einem von der Kamera aufgenommenen Bild die dreidimensionale Lage und/oder Orientierung eines oder mehrerer geometrischer Merkmale in dem Bild relativ zu einem Bezugssystem zu bestimmen. Beispielsweise können einer solchen Bildauswertung bestimmte geometrische Merkmale, etwa Bohrungen, Aussparungen oder Vorsprünge mit kreisförmigem, rechteckigem oder anderem Querschnitt, vorgegeben werden. Die Bildauswertung ist dann in der Lage, solche Merkmale, beispielsweise deren Ränder auf der Oberfläche des Manipulatorgliedes, in dem von der Kamera aufgenommenen Bild zu erkennen und deren dreidimensionale Lage, etwa ihrer Mittelpunkte, und/oder deren dreidimensionale Orientierung, beispielsweise ihrer Hauptachsen, Randlinien oder dergleichen, zu bestimmen.

Ist die dreidimensionale Lage wenigstes dreier ausgezeichneter Punkte oder die Lage und Orientierung wenigstens eines geometrischen Merkmals des Manipulatorgliedes bekannt, kann hieraus die Position des Manipulatorgliedes, insbesondere die Lage und Orientierung eines gliedfesten Referenzkoordinatensystems bestimmt werden. Im Gegensatz zu der eingangs erläuterten Mittelung von Durchstoßpunkten ist dieses Verfahren präziser und weniger fehleranfällig.

Auf Basis der so erfassten Positionen des Manipulatorgliedes kann dann eine kinematische Abweichung kompensiert werden. Hierzu kann beispielsweise ein kinematisches Modell des Manipulators durch Änderung seiner Parameter, etwa der Denavit-Hartenberg-Parameter, der Achsabstände und -winkellagen, Nullpunktfehler, Gelenklose und -elastizitäten und dergleichen, (re)kalibiriert werden. Gleichermaßen kann eine Korrekturfunktion ermittelt und bei der Berechnung der Vorwärts- oder Rückwärtskinematik vor- bzw. nachgeschaltet oder anzufahrenden Posen aufgeschaltet werden. Grundsätzlich ist auch eine mechanische Kompensation, etwa durch Verschieben des Manipulators, Ändern seiner Gliedlängen oder dergleichen, möglich.

Insbesondere, um die Erfassung durch die Kamera zu verbessern und die Bildauswertung zu vereinfachen, können an dem Manipulatorglied von der 3D-Positionserfassungseinrichtung erfassbare Marken angeordnet sein, beispielsweise aktiv oder passiv strahlende Marken wie LEDs, fluoriszierende Muster, andere Leucht- oder Reflektionsmittel.

Um die Erfassung durch nur eine Kamera zu verbessern, nimmt in zwei oder mehr der verschiedenen Posen des Manipulators das Manipulatorglied vorzugsweise im Wesentlichen die gleich Lage, jedoch unterschiedliche Orientierungen ein. Beispielsweise kann das Werkzeug bzw. der TCP zwischen verschiedenen Posen um seine Stoßrichtung umorientiert werden.

Die Erfassung der Positionen des Manipulatorgliedes kann vorzugsweise einmalig vorab durchgeführt zu werden, um eine Referenzkonfiguration des Manipulators zu kalibrieren und beispielsweise Referenzparameter für ein kinematisches Modell oder eine Korrekturfunktion zu bestimmen. Dann kann die vorstehend beschriebene Kompensation einer kinematischen Abweichung periodisch oder je nach Bedarf durchgeführt werden, indem in vorgegebenen absoluten, i.e. kalendarischen Zeitabständen, oder Betriebszeitabständen die Posen angefahren, die Positionen erfasst und das kinematische Modell oder die Korrekturfunktion rekalibriert werden.

Weitere Vorteile und Merkmale ergeben sich aus den Unteransprüchen und den Ausführungsbeispielen. Hierzu zeigt, teilweise schematisiert:
- Fig. 1:: einen Roboter in zwei Posen bei einer Temperaturdriftkompensation nach einer Ausführung der vorliegenden Erfindung; und
- Fig. 2:: den Ablauf der Temperaturdriftkompensation nach Fig. 1.

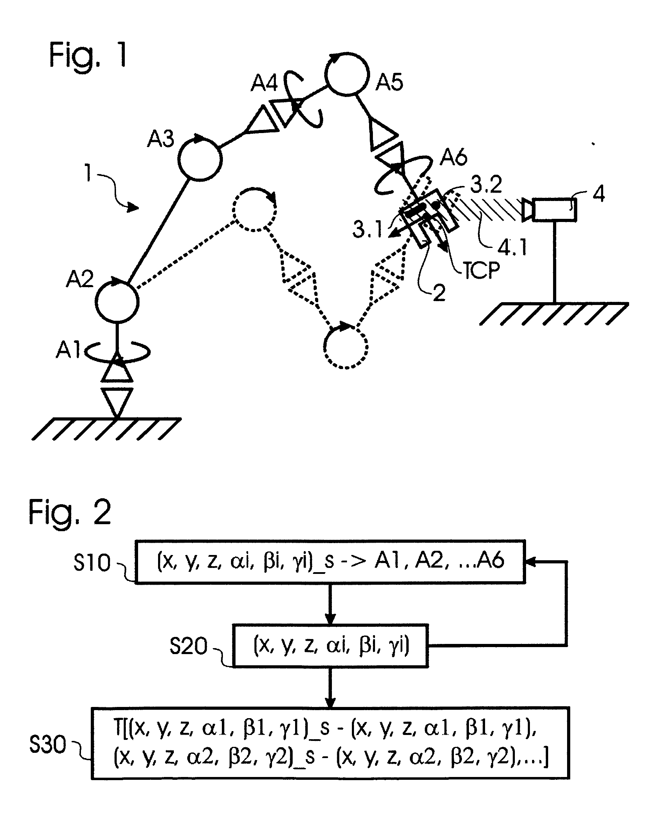

Fig. 1 zeigt die Kinematik eines sechsachsigen Knickarmroboters 1 mit einem um eine Vertikalachse A1 drehbaren Grundgestell, einem gegenüber diesem um eine erste Horizontalachse A2 drehbaren Karussell, an dem um eine hierzu parallele zweite Horizontalachse A3 drehbar eine Zentralhand mit drei wechselweise orthogonalen Drehachsen A4 bis A6 befestigt ist.

Der Roboter 1 weist ein Arbeitswerkzeug in Form beispielsweise eines Greifers oder einer Schweißzange 2 auf, dessen Lage und Orientierung gegenüber einem Inertialsystem durch die drei Lagekomponenten x, y und z des Ursprungs eines werkzeugfesten Referenzkoordinatensystems TCP und dessen Drehwinkel α, β und γ beschrieben werden können. Aus den Gelenkstellungen A1...A6 der sechs Drehgelenke des Roboters 1 ergibt sich aus einem kinematischem Modell des Roboters, in dem insbesondere seine Achsabstände, -winkellagen und vorzugsweise auch Elastizitäten berücksichtigt sind, eindeutig die Position des Werkzeug-Referenzkoordinatensystems, in nicht-singulären Posen umgekehrt aus diesen Positionen durch Lösen der Rückwärtskinematik die zugehörigen Gelenkstellungen.

Zur Kompensation einer temperaturbedingten Veränderung des Roboters 1 gegenüber einer Referenzkonfiguration aufgrund von Wärmedehnungen seiner Glieder wird der Roboter 1 in einem Schritt S10 (Fig. 2) in verschiedene Posen gefahren. Hierzu werden für unterschiedliche Orientierungen, jedoch im Wesentlichen gleichbleibende Lagen des TCPs verschiedene (i=1, 2,...) Soll-Positionen (x, y, z, αi, βi, γi)_s des Werkzeug-Referenzkoordinatensystems vorgegeben und die hierzu gehörigen Achsstellungen A1, ... A6 angefahren.

In Fig. 1 ist durchgezogen eine erste und strichliert eine zweite solche Pose dargestellt. Man erkennt, dass sich das Werkzeug 2 im Wesentlichen in der gleichen Lage befindet, jedoch unterschiedliche Orientierungen aufweist, wobei in der fünften Achse im Wesentlichen entgegengesetzte Stellungen A5 bzw. -A5 eingenommen werden.

In einem Schritt S20 (Fig. 2) wird in der jeweiligen Pose durch eine externe 3D-Positionserfassungseinrichtung die Position des Werkzeuges erfasst. Hierzu nimmt eine ortsfeste Kamera 4 ein Bild geometrischer Merkmale 3.1, 3.2 des Werkzeugs 2 auf, wie in Fig. 2 durch den strichlierten Erfassungsbereich 4.1 der Kamera 4 angedeutet. Bei den geometrischen Merkmalen handelt es sich im Ausführungsbeispiel um eine Langlochbohrung 3.1 und einen Vorsprung 3.2 mit kreisförmigem Querschnitt, die an dem Werkzeug 2 ohnehin vorhanden oder zu diesem Zweck ausgebildet sind.

Eine Bilderkennung (nicht dargestellt) sucht in dem von der Kamera 4 aufgenommenen Bild die vorgegebenen Merkmale 3.1, 3.2 und bestimmt hieraus die Lage und vorzugsweise auch Orientierung der Stirnseite des zylinderförmigen Vorsprungs 3.2 und des Randes des Langlochs 3.1. Daraus wird die tatsächliche Lage und gegebenenfalls Orientierung (x, y, z, αi, βi, γi) des TCPs in der jeweiligen Pose i ermittelt.

In einem Schritt S30 wird dann eine Temperaturdrift T auf Basis der Differenzen [(x, y, z, αi, βi, γi)_s - (x, y, z, αi, βi, γi)] zwischen Soll- und Ist-Position für die verschiedenen Posen i bestimmt. Beispielsweise können die Parameter des kinematischen Modells, etwa seine Denavit-Hartenberg-Parameter, so bestimmt werden, dass die Summe der Beträge dieser Differenzen oder deren Maximum minimiert wird. Dieses Optimierungsverfahren ist auch auf Basis von Soll-Ist-Abweichungen, die nur die Lage berücksichtigen [(x, y, z)_s - (x, y, z)], möglich. Gleichermaßen kann auch eine Korrekturfunktion bestimmt werden, die auf einen abgespeicherten, beispielsweise geteachten Gelenkstellungssatz aufgeschaltet wird und die Differenzen (x, y, z, αi, βi, γi)_s - (x, y, z, αi, βi, γi) kompensiert.

Wird nun in der Robotersteuerung dieses veränderte kinematische Modell zugrundegelegt, um beispielsweise die Gelenkstellungen A1,...A6 zu berechnen, die zum Anfahren einer Soll-Position des TCPs erforderlich sind, oder wird geteachten Posen die Korrekturfunktion aufgeschaltet, fährt der Roboter 1 trotz veränderter Kinematik mit seinem TCP wieder exakt die gewünschten Positionen an.

Dabei kann die Erfassung der Positionen des Manipulatorgliedes 2 entsprechend der Schritte S10, S20 einmalig vorab durchgeführt zu werden, um eine Referenzkonfiguration des Roboters 1 zu kalibrieren und Referenzparameter für das kinematische Modell oder die Korrekturfunktion zu bestimmen. Dann kann die vorstehend beschriebene Temperaturdriftkompensation periodisch oder je nach Bedarf durchgeführt werden, indem in vorgegebenen absoluten, i.e. kalendarischen Zeitabständen, oder Betriebszeitabständen die Posen angefahren, die Positionen erfasst und das kinematische Modell oder die Korrekturfunktion rekalibriert werden.

### Bezugszeichenliste

- 1: Roboter
- 2: Werkzeug (Greifer, Schweißzange)
- 3.1: Langloch
- 3.2: zylinderförmiger Vorsprung
- 4: ortsfeste Kamera
- 4.1: Sichtbereich der Kamera
- A1,...A6: Achse des Roboters
- TCP: Tool Center Point

## Patentansprüche

1. Verfahren zur Kompensation einer kinematischen Abweichung, insbesondere einer Temperaturdrift, eines Manipulators, insbesondere eines Roboters (1), mit den Schritten:
(S10) Anfahren verschiedener Posen des Manipulators;
(S20) Erfassen einer Position (x, y, z, α, β, γ) eines Manipulatorgliedes (2) mittels einer externen 3D-Positionserfassungseinrichtung (4) in der jeweiligen Pose; und
(S30) Kompensieren der kinematischen Abweichung auf Basis der erfassten Position des Manipulatorgliedes.

2. Verfahren nach Anspruch 1, **dadurch gekennzeichnet, dass** das Manipulatorglied ein Arbeitswerkzeug (2) des Manipulators ist.

3. Verfahren nach einem der vorhergehenden Ansprüche, **dadurch gekennzeichnet, dass** die 3D-Positionserfassungseinrichtung eine, insbesondere ortsfeste, Kamera (4) und eine Bildauswertung umfasst.

4. Verfahren nach einem der vorhergehenden Ansprüche, **dadurch gekennzeichnet, dass** an dem Manipulatorglied von der 3D-Positionserfassungseinrichtung erfassbare Marken angeordnet sind.

5. Verfahren nach einem der vorhergehenden Ansprüche, **dadurch gekennzeichnet, dass** von der 3D-Positionserfassungseinrichtung wenigstens zwei, insbesondere wenigstens drei geometrische Merkmale (3.1, 3.2) des Manipulatorgliedes erfasst und deren Lage von einer Bildauswertung erkannt werden.

6. Verfahren nach einem der vorhergehenden Ansprüche, **dadurch gekennzeichnet, dass** von der 3D-Positionserfassungseinrichtung die Lage und Orientierung wenigstens eines geometrischen Merkmals (3.1, 3.2) des Manipulatorgliedes erfasst wird.

7. Verfahren nach einem der vorhergehenden Ansprüche, **dadurch gekennzeichnet, dass** eine von der 3D-Positionserfassungseinrichtung erfasste Position eine Lage (x, y, z) und/oder Orientierung (α, β, γ) des Manipulatorgliedes umfasst.

8. Verfahren nach einem der vorhergehenden Ansprüche, **dadurch gekennzeichnet, dass** in wenigstens zwei verschiedenen Posen (i) des Manipulators das Manipulatorglied im Wesentlichen die gleich Lage (x, y, z) und unterschiedliche Orientierungen (αi, βi, γi) einnimmt.

9. Verfahren nach einem der vorhergehenden Ansprüche, **dadurch gekennzeichnet, dass** in zwei verschiedenen Posen des Manipulators wenigstens eine Achse des Manipulators eine im Wesentlichen entgegengesetzte Stellung (A5, -A5) einnimmt.

10. Vorrichtung zur Kompensation einer kinematischen Abweichung, insbesondere einer Temperaturdrift, eines Manipulators, insbesondere eines Roboters (1), umfassend eine 3D-Positionserfassungseinrichtung mit einer Kamera (4) und einer Bildauswertungseinrichtung,
**gekennzeichnet durch** eine Kompensationseinrichtung, die zur Durchführung eines Verfahrens nach einem der vorhergehenden Ansprüche eingerichtet ist.

11. Computerprogramm, dass ein Verfahren nach einem der Ansprüche 1 bis 9 ausführt, wenn es in einer Vorrichtung nach Anspruch 10 abläuft.

12. Computerprogrammprodukt mit Programmcode, der auf einem maschinenlesbaren Träger gespeichert ist und ein Computerprogramm nach Anspruch 11 umfasst.
